# EUROPEAN PATENT SPECIFICATION

(11) **EP 2 842 621 B1**
(45) Date of publication and mention of the grant of the patent: **19.02.2020**
(21) Application number: 14766383.5
(22) Date of filing: 18.06.2014
(51) Int. Cl.: B01D 71/56

(54) **METHOD FOR PREPARING POLYAMIDE-BASED REVERSE OSMOSIS MEMBRANE**
VERFAHREN ZUR HERSTELLUNG EINER POLYAMID-UMKEHROSMOSEMEMBRAN
PROCÉDÉ DE PRÉPARATION D'UNE MEMBRANE À OSMOSE INVERSE

(30) Priority: 18.06.2013 KR 20130069837
(43) Date of publication of application: 04.03.2015
(73) Proprietor: LG Chem, Ltd., Seoul 150-721 (KR)
(72) Inventor: KIM, Jae-Hong, Daejeon 305-738 (KR); KO, Young-Hoon, Daejeon 305-738 (KR); SHIN, Chong-Kyu, Daejeon 305-738 (KR); SONG, Keun-Won, Daejeon 305-738 (KR)
(74) Representative: Goddar, Heinz J.
(86) International application number: PCT/KR2014/005383
(87) International publication number: WO 2014/204220

(56) References cited:
- WO-A1-2008/030006
- CN-A- 101 462 025
- KR-A- 20080 075 765
- KR-A- 20130 049 627
- KR-B1- 100 551 574
- KR-B1- 100 781 625
- US-A1- 2012 012 527
- US-A1- 2012 241 373

## Description

### [Technical Field]

The present disclosure relates to a method of manufacturing a polyamide-based reverse osmosis membrane and a reverse osmosis membrane manufactured using the same, and more particularly, to a method of manufacturing a polyamide-based reverse osmosis membrane having improved salt rejection and permeable flux properties through increasing a surface area and a degree of roughness of a polyamide active layer, and a reverse osmosis membrane manufactured using the same.

### [Background Art]

In general, a phenomenon in which a solvent moves from a solution having a relatively low solute concentration to a solution having a relatively high solute concentration by passing through a membrane, in two solutions separated from each other by a semipermeable membrane, is known as an osmosis phenomenon. Here, pressure acting on a solution having a high solute concentration by the moved solvent is referred to as osmotic pressure. Meanwhile, when external pressure having a pressure level higher than an osmotic pressure level is applied, the solvent moves to a solution having a relatively low solute concentration, which is referred to as reverse osmosis. Various salts or organic materials may be separated through a semipermeable membrane by using a reverse osmosis principle and applying a pressure gradient as driving power. Reverse osmosis membranes using such a reverse osmosis phenomenon have been used for the supply of water for domestic, commercial and industrial uses, by separating materials present in water on the molecular level and removing salt from salt water or seawater.

As a function of the reverse osmosis membrane, the most important consideration is to have a relatively high salt rejection rate at the boundary of a membrane and maintain a high degree of solvent permeability even at a relatively low level of pressure. To this end, a reverse osmosis membrane having excellent salt rejection properties while maintaining a high degree of permeable flux by forming an active layer having a reduced thickness for the removal of salt on a porous support for maintaining mechanical strength of a membrane has been proposed (US Patent No. 4,277,344).

As a representative embodiment of the reverse osmosis membrane disclosed in US Patent No. 4,277,344, a polyamide-based reverse osmosis membrane may be provided. Such a polyamide-based reverse osmosis membrane has been manufactured through a method of forming a polyamide active layer on a fine porous support. In further detail, the polyamide-based reverse osmosis membrane has been manufactured through the method in which a polysulfone layer is formed on a non-woven fabric to form a fine porous support, the fine porous support is dipped in an aqueous solution of m-phenylenediamine (hereinafter, referred to as 'mPD') to form an mPD layer and then be dipped in an organic solvent of trimesoyl chloride (hereinafter, referred to as 'TMC') or be coated therewith so as to allow the mPD layer to contact the TMC and thus be interfacially polymerized, so as to form the polyamide active layer. Since the polarization only occurs at an interface between a non-polar organic solution and a polar organic solution by the contact therebetween, the polyamide active layer having a relatively reduced thickness is formed. A nonreacted aromatic amine on the polyamide active layer oxidation reacts with chlorine, and thus, the polyamide active layer may be stabilized from a further oxidation reaction.

However, in the case of the above-proposed reverse osmosis membrane, since a degree of reduction in chlorine resistance of the reverse osmosis membrane depending on time is rapid, a problem in which a replacement period of a membrane is short is present. Therefore, in order to delay the degree of reduction in chlorine resistance of the reverse osmosis membrane, methods of increasing a specific surface area of an active layer has been proposed. Japanese Patent Laid-Open Publication No. H10-337454 discloses that after the formation of an active layer, a membrane having the active layer formed thereon is dipped in an acidic solution so that a surface of a skin layer becomes uneven or wrinkled in order to increase a specific surface area of the skin layer of a reverse osmosis membrane. Korean Patent Laid-Open Publication No. 1998-0068304 discloses that after the manufacturing of a reverse osmosis membrane, post processing is performed using a relatively strong acid so as to increase a degree of surface roughness thereof.

However, as disclosed in Japanese Patent Laid-Open Publication No. H10-337454, when the membrane having the active layer formed thereon is dipped in an acidic solution, a surface of the membrane has a negative charge such that a pollution material having a positive charge is attached to the membrane, thereby deteriorating a permeable flux ratio through a membrane. Thus, separate post processing in which a membrane surface needs to be coated with a polymer having electric neutrality should be undertaken.

In addition, in the method disclosed in Korean Patent Laid-Open Publication No. 1998-0068304, in order to solve the problem in which a negative charge occurs on a membrane surface, a polyamide membrane is oxidation treated to increase a degree of surface roughness and then, a surface thereof is secondarily coated with an amine aqueous solution and a halide compound. In this case, a separate post treatment is also required.

CN101462025A discloses a double-layer polyamide surface layer composite reverse osmosis membrane and the preparation thereof.

### [Disclosure]

### [Technical Problem]

Some embodiments of the present disclosure may provide a polyamide-based reverse osmosis membrane having excellent salt rejection and permeable flux properties using a membrane by increasing a surface area and a degree of surface roughness of a polyamide active layer through a process in which the polyamide active layer is polymerized and formed and an organic solution containing a multifunctional aromatic amine compound then additionally contact therewith.

### [Technical Solution]

The above problem is solved in accordance with the independent claim. Preferred embodiments result from the subclaims.

According to an embodiment in the present disclosure, a method of manufacturing a reverse osmosis membrane, the method comprising:
forming an aqueous solution layer containing a multifunctional aromatic amine compound on a porous support;
forming a polyamide active layer by bringing an organic solution containing an acyl halide compound to contact an upper portion of the aqueous solution layer; and
allowing an organic solution containing a multifunctional aromatic amine compound to contact an upper portion of the polyamide active layer, wherein the organic solution containing the multifunctional aromatic amine compound comprises an alcohol solvent,
the alcohol concentration is 50 weight% or more, and the organic solution containing the multifunctional aromatic amine compound comprises 1 to 30 weight% of a multifunctional aromatic amine compound.

Here, the multifunctional aromatic amine compound may be a compound represented by the following chemical formula 1.

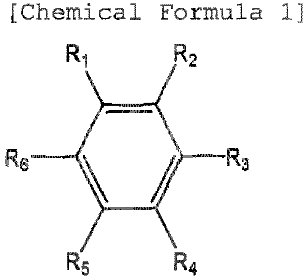

In Chemical Formula 1 above, at least two or more of R₁ to R₆ are NX₁X₂, and the remainder thereof are H or halogen, respectively independently, wherein X₁ and X₂ are respectively independently selected from a group consisting of hydrogen, C₁₋₈alkoxy, C₁₋₁₅alkyl, C₂₋₁₂alkenyl, C₃₋₈cycloalkyl, C₃₋₈cycloalkenyl, C₄₋₁₂alkylcycloalkyl, C₄₋₁₂alkylcycloalkenyl, C₆₋₁₀aryl, and C₆₋₁₀aryl-C₁₋₈alkyl.

In this case, the multifunctional aromatic amine compound may be selected from a group consisting of m-phenylenediamine, p-phenylenediamine, 1,3,6-benzene triamine, 4-chloro-1,3-phenylenediamine, 6-chloro-1,3-phenylenediamine, 3-chloro-1,4-phenylenediamine, and mixtures thereof, and in detail, may be m-phenylenediamine.

The acyl halide compound may be one or more selected from a group consisting of trimesoyl chloride, isophthaloyl chloride, and terephthaloyl chloride,

The allowing of the organic solution containing the multifunctional aromatic amine compound to contact the upper portion of the polyamide active layer may include forming polyamide through an additional interfacial polymerization reaction of a nonreacted acyl halide compound and a multifunctional aromatic amine compound on the polyamide active layer.

The organic solution containing the multifunctional aromatic amine compound contains an alcohol solvent.

The organic solution containing the multifunctional aromatic amine compound may include one or more solvents selected from a group consisting of isopropyl alcohol (IPA), methanol, ethanol, and n-propanol.

The organic solution containing the multifunctional aromatic amine compound contains 1 to 30 weight% of a multifunctional aromatic amine compound.

On the other hand, the multifunctional aromatic amine compound s used in the aqueous solution layer containing the multifunctional aromatic amine compound and in the organic solution containing the multifunctional aromatic amine compound may be the same kind of compounds.

Further described herein is a reverse osmosis membrane manufactured through the manufacturing method of the present disclosure described above may include a polyamide active layer formed on a porous support. The polyamide active layer may include a three-dimensional reticular structure region formed through additional polymerization of a nonreacted acyl halide compound and a multifunctional aromatic amine compound.

Here, the polyamide active layer of the reverse osmosis membrane may have a thickness of 200 to 1000nm, and the three-dimensional reticular structure region formed on the polyamide active layer may range from 50 to 90% with respect to an overall area of the polyamide active layer.

Further described herein is a water treatment module which may include at least one or more reverse osmosis membranes described above, and a water treatment device which may include at least one or more water treatment modules described above.

### [Advantageous Effects]

A reverse osmosis membrane formed through the manufacturing method of the present disclosure in which a polyamide active layer is polymerized and formed and an organic solution containing a high-concentration multifunctional aromatic amine compound then additionally makes contact therewith may have an effect exhibiting a high permeable flux and excellent salt rejection properties by increasing a surface area and roughness value of a polyamide active layer.

### [Description of Drawings]

FIG. 1 is an SEM image obtained by imaging a surface of a polyamide active layer manufactured in Embodiment 4 of the present disclosure at 10000x magnification using an SEM;
FIG. 2 is an SEM image obtained by imaging a surface of the polyamide active layer manufactured in Embodiment 4 of the present disclosure at 20000x magnification;
FIG. 3 is an SEM image obtained by imaging a surface of the polyamide active layer manufactured in Embodiment 4 of the present disclosure at 50000x magnification;
FIG. 4 is an SEM image obtained by imaging a surface of a polyamide active layer manufactured in Comparative Example 1 at 10000x magnification;
FIG. 5 is an SEM image obtained by imaging a surface of the polyamide active layer manufactured in Comparative Example 1 at 20000x magnification; and
FIG. 6 is an SEM image obtained by imaging a surface of the polyamide active layer manufactured in Comparative Example 1 at 50000x magnification.

### [Best Mode]

Hereinafter, exemplary embodiments of the present disclosure will now be described in detail with reference to the accompanying drawings.

As a result of repeated research conducted in order to develop a reverse osmosis membrane having excellent properties in terms of salt rejection and permeable flux, the inventors of the present disclosure found that when a polyamide active layer is further formed through processes of forming an aqueous solution layer containing a multifunctional aromatic amine compound on a support, enabling an organic solution containing an acyl halide compound to contact the aqueous solution layer to form a polyamide active layer, and then allowing an organic solution containing a multifunctional aromatic amine compound to contact thereon, a reverse osmosis membrane having excellent salt rejection and permeable flux properties may be obtained, and as the result thereof, the present disclosure is provided.

In further detail, a reverse osmosis membrane according to an embodiment in the present disclosure may be manufactured through processes in which an aqueous solution layer containing a multifunctional aromatic amine compound is formed on a porous support (hereinafter, referred to as a 'first process'); an organic solution containing an acyl halide compound contacts the aqueous solution layer to form a polyamide active layer (hereinafter, referred to as a 'second process') ; and an organic solution containing a multifunctional aromatic amine compound contacts the polyamide active layer (hereinafter, referred to as a 'third process'), and through processes in which a nonreacted acyl halide compound and a multifunctional aromatic amine compound form polyamide through an additional interfacial polymerization reaction thereof, whereby a reverse osmosis membrane having an increased surface area or degree of roughness may be manufactured.

First, in the process in which an aqueous solution layer containing a multifunctional aromatic amine compound is formed on a porous support (first process), as the porous support, the support may be used by forming a coating layer of a polymer material on a non-woven fabric. As the polymer material, for example, polysulfone, polyethersulfone, polycarbonate, polyethylene oxide, polyimide, polyetherimide, polyether ether ketone, polypropylene, polymethylpentene, polymethyl chloride, polyvinylidene fluoride, or the like may be used, but the polymer material is not limited thereto. In detail, polysulfone may be used.

Here, in the case of the aqueous solution containing the amine compound, although any multifunctional aromatic amine compound may be used as long as it is a multifunctional aromatic amine compound used in manufacturing a reverse osmosis membrane, a compound represented by the following chemical formula 1 may be used.

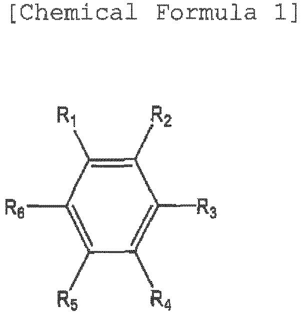

In Chemical Formula 1 above, at least two or more of R₁ to R₆ are NX₁X₂, and the remaining ones are H or halogen, respectively independently, wherein X₁ and X₂ are respectively independently selected from a group consisting of hydrogen, C₁₋₈alkoxy, C₁₋₁₅alkyl, C₂₋₁₂alkenyl, C₃₋₈cycloalkyl, C₃₋₈cycloalkenyl, C₉₋₁₂alkylcycloalkyl, C₄₋₁₂alkylcycloalkenyl, C₆₋₁₀aryl, and C₆₋₁₀aryl-C₁₋₈alkyl.

On the other hand, the multifunctional aromatic amine compound may be, for example, m-phenylenediamine (mPD), p-phenylenediamine, 1,3,6-benzene triamine, 4-chloro-1,3-phenylenediamine, 6-chloro-1,3-phenylenediamine, 3-chloro-1,4-phenylenediamine, or a mixture thereof, but the present invention is not limited thereto.

In this case, the content of the multifunctional aromatic amine compound in the amine aqueous solution may range from around 0.5 to 5 weight%. When this content range is satisfied, a sufficient degree of film formation may be obtained so as to have appropriate water permeability while exhibiting a relatively high degree of salt rejection.

Here, as a method of forming an amine aqueous solution layer on the porous support, any method may be used as long as it is a method for forming an aqueous solution on a support. For example, any method such as a spraying method, a coating method, a dipping method, a dripping method, and the like may be used.

Selectively, a process of removing an aqueous solution containing an excessive amount of a multifunctional aromatic amine compound may be further performed. Here, in a case in which an excessive amount of aqueous solution is not removed, a problem in which a polyamide active layer may not be stably formed on a support layer and a non-uniform layer may be formed after interfacial polymerization may occur. The removal of an excessive aqueous solution may be performed using a sponge, an air knife, nitrogen gas blowing, natural drying, a press roll, or the like, but the present disclosure is not limited thereto.

Subsequently, a process in which a polyamide active layer is formed by allowing an organic solution containing an acyl halide compound to contact an upper portion of the aqueous layer may be performed as a second process. In the second process, the acyl halide compound and the multifunctional aromatic amine compound coated on a surface react with each other to create polyamide by interfacial polymerization to be absorbed by a fine porous support and form a thin film thereon. In the case of the contact method described above, the polyamide active layer may be formed through a method such as dipping, spraying, coating, and the like.

In this case, although the present disclosure is not particularly limited, the acyl halide compound may be, for example, an aromatic compound having two or three carboxylic acid halides, and a mixture of one or more selected from a group consisting of trimesoyl chloride, isophthaloyl chloride, and terephthaloyl chloride may be used.

On the other hand, as an organic solvent of a solution containing an acyl halide compound, a solvent that is provided as a hydrocarbon compound, is not participated in an interfacial polymerization reaction, not chemically bonded to an acyl halide compound, and does not cause damage to the porous support layer, may be used. For example, hexane, hepthane, octane, nonane, decane, undecane, dodecane, IsoPar(Exxon), ISOL-C(SK Chem), ISOL-G (Exxon) may be used.

In addition, the contact time or dipping time may be around 1 minute to 5 hours, in detail, 1 minute to 3 hours. In a case in which the dipping time is less than 1 minute, a coating layer may not be sufficiently formed, and in a case in which the dipping time exceeds 5 hours, a coating layer thickness may become excessive, resulting in a negative effect in which permeable flux through the reverse osmosis membrane may be reduced.

When the polyamide active layer is formed on the porous support through the method as described above, a drying process and a cleaning process thereof may be selectively performed. In this case, the drying process may be performed in an oven of 45°C to 80°C for around 1 to 10 minutes. In addition, although the cleaning process is not particularly limited, for example, the cleaning process may be performed using a basic aqueous solution. As the basic aqueous solution used therefor, although it is not particularly limited, for example, a sodium carbonate solution may be used. In detail, the drying process may be performed in a sodium carbonate solution of 20 °C to 30°C for 1 to 24 hours.

Next, after the polyamide active layer is formed on the porous support, a process in which the organic solution containing a multifunctional aromatic amine compound contacts an upper portion of the polyamide active layer may be performed (a third process). The third process may also be performed before performing the cleaning process using a basic aqueous solution, after the drying process using an oven.

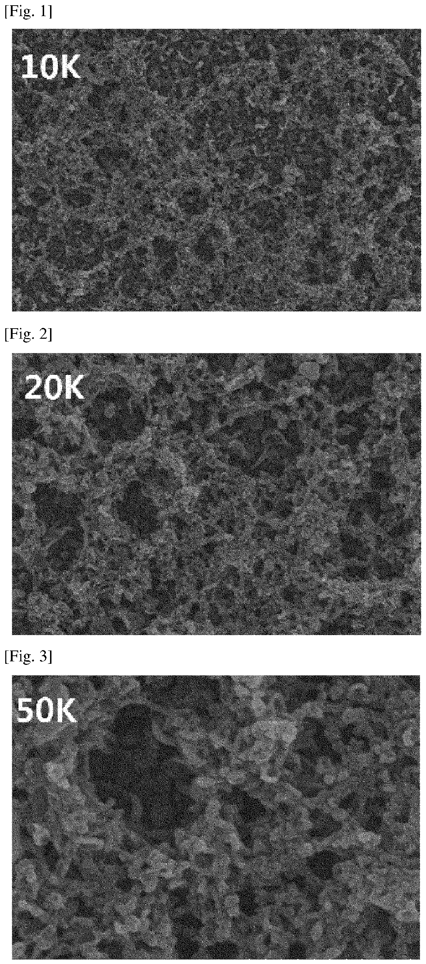

Here, the third process may be characterized in that polyamide is created through an additional interfacial polymerization reaction of a multifunctional aromatic amine compound allowing the polyamide active layer to newly contact a residual acyl halide compound. In this case, as can be confirmed from FIGS. 1 to 3, by allowing an additional polymerization reaction to occur on the polyamide active layer, a polyamide having a three-dimensional reticular structure may be created.

In a case in which an excessive amount of an amine compound is introduced into a nonreacted acyl halide compound present on the polyamide active layer created in the second process, a complementary reaction covering a partial region in which a degree of polymerization of polyamide is degraded in the second process may be carried out through the additional interfacial polymerization reaction so as to significantly improve salt rejection properties.

In addition, in this case, since a concentration of the present nonreacted acyl halide compound is partially different, a degree of polymerization of the additional polyamide may be different, and since the reaction is further speedy in a partial region in which the concentration of the nonreacted acyl halide compound is relatively high and a degree of roughness of a membrane surface may thus be increased, permeable flux may also be improved.

Regarding the organic solvent of the organic solution containing the multifunctional aromatic amine compound it is required that an alcohol solvent is contained therein, and in further detail, one or more solvents selected from a group consisting of isopropyl alcohol (IPA), methanol, ethanol, and n-propanol may be contained therein.

For example, when the organic solution containing an amine compound is allowed to additionally contact, in the case of an alcohol solvent, since wettability thereof is relatively good as compared to the case of an aqueous solution, an additional reaction employing the nonreacted acyl halide compound may be performed further smoothly. Further, unlike the case of contact of an aqueous, since volatility of the alcohol solvent is high compared to that of an aqueous solution, sufficient drying may be achieved at the time of drying thereof at a room temperature for 10 minutes, performed thereafter.

The alcohol concentration is 50% or more, in detail, 70% or more. When the alcohol concentration satisfies the range described above, since a separate drying process may not be performed due to relatively rapid evaporation of the solvent, damage to a membrane due to heat generated during the drying process may be significantly reduced.

In this case, a kind of the multifunctional aromatic amine compound used in the third process may be the same as that of the multifunctional aromatic amine compound used in the first process. The multifunctional aromatic amine compound may be a compound represented by Chemical Formula 1 above. In a case in which a post-treated multifunctional amine compound is a cyclic amine compound such as piperazine, other than an aromatic amine compound, a degree of reactivity with the acyl halide compound may be relatively low. In the case of a chain amine compound, the size of a pore of polyamide may be increased through additional interfacial polymerization. As a result, a salt rejection rate may be significantly decreased and the use thereof as a reverse osmosis membrane may be difficult.

Here, the multifunctional aromatic amine compound s used in the aqueous solution layer containing the multifunctional aromatic amine compound and in the organic solution containing the multifunctional aromatic amine compound may be the same kind. This is due to advantages in terms of adhesion between a polyamide active layer and an additionally created polyamide and uniformity in the size of a pore of the polyamide active layer.

Here, in the case of the organic solution containing the multifunctional aromatic amine compound, the content of the multifunctional aromatic amine compound therein is 1 to 30 weight%, in detail, 5 to 30 weight%, in further detail, 10 to 30 weight%. When the content of the multifunctional aromatic amine compound is less than 1 weight%, it may be difficult to increase a surface area of the polyamide active layer due to a relatively low concentration of amine compound through a sufficient reaction with a nonreacted acyl halide compound present on an upper portion of the polyamide active layer. When the content of the multifunctional aromatic amine compound is more than 30 weight%, since the reaction with the nonreacted acyl halide compound is excessively rapid and a solution concentration may thus be increased as well as the reduction in permeable flux, oxidation of a solution may be relatively fast such that a continuous use thereof in a uniform condition may be difficult.

In the third process, unlike the first process of the present disclosure in which 'an aqueous solution layer containing a multifunctional aromatic amine compound is formed on a porous support', since a nonreacted acyl halide compound is interfacial polymerized with a polyamide active layer on the polyamide active layer, an additional polymerization reaction may occur by introducing an excessive amount of multifunctional aromatic amine compound.

In this case, the contact time may be around 1 to 60 seconds, in detail, around 5 to 20 seconds. In a case in which the contact time is less than 1 second, the additional interfacial polymerization reaction may not be sufficient. Further, in a case in which the contact time exceeds 60 seconds, a degree of polymerization is relatively excessive and a reacted residual multifunctional aromatic amine compound may be deposited on a surface due to volatility of a solvent, thus causing a problem in which a Maillard reaction occurs.

A reverse osmosis membrane manufactured through the manufacturing method described above may be provided. The reverse osmosis membrane may include a porous support and a polyamide active layer formed on the porous support. Here, the polyamide active layer may have a three-dimensional reticular structure region formed through additional polymerization of a reacted acyl halide compound and the multifunctional aromatic amine compound.

In further detail, the polyamide active layer of the reverse osmosis membrane manufactured through the manufacturing method of the present disclosure may have a three-dimensional reticular structure region formed through a polymerization reaction occurring due to an organic solution containing an additionally contacting multifunctional aromatic amine compound (see FIGS. 1 to 3). In this case, by the additional polymerization reaction, since a concentration of the nonreacted acyl halide is locally different and a degree of polymerization of a polyamide is thus significantly different, polymerization may partially occur in a region to thus form polyamide having different heights depending on a location therein. Comparing FIGS. 1 to 3 and FIGS. 4 to 6 with each other, it can be appreciated that the polyamide active layer of FIG. 1 has a three-dimensional reticular structure having a large difference in terms of a degree of roughness and numerous, large and small pores.

An area of such a three-dimensional reticular structure region may be in a range of around 50% to 90% with respect to an overall area of the polyamide active layer, in detail, around 60% to 80%. In a case in which the three-dimensional reticular structure region satisfies the above-described range, a degree of polymerization of polyamide may be increased so as to sufficiently increase a degree of roughness of the polyamide active layer and an amount of pores while improving a salt rejection rate, whereby permeable flux may also be improved.

In this case, the area of the three-dimensional reticular structure region may be obtained by, for example, obtaining a two-dimensional image of a membrane surface in a state in which light and darkness contrast with one another, depending on a difference in illumination, is relatively maximized using a scanning electron microscope and calculating a ratio of polyamide formed through additional polymerization, with respect to the overall area of a membrane.

On the other hand, a thickness of the polyamide active layer may be in a range of 200 to 1000nm, in detail, 300 to 500nm, in further detail, 350 to 400nm. Meanwhile, in the case of a reverse osmosis membrane according to the related art, a thickness of a polyamide active layer is in a range of 100 to 200nm. In a case in which the thickness of the polyamide active layer according to the related art exceeds this range, a salt rejection rate was maintained, but a problem in which permeable flux properties were significantly decreased was present. However, the polyamide active layer manufactured according to an embodiment of the present disclosure may have a significantly high degree of roughness due to polyamide having a three-dimensional reticular structure, and thus, even in the case that a polymerization thickness is increased to 200nm or more due to a polyamide having the three-dimensional reticular structure, permeable flux properties may not be deteriorated. On the other hand, in a case in which a thickness of the polyamide active layer exceeds 1000nm, permeable flux properties may be deteriorated as in a polyamide-based reverse osmosis membrane according to the related art.

### [Mode for Disclosure]

### <Embodiment 1>

18 weight% of a polysulfone solid was contained in a DMF (N,N-dimethylformamide) solution to then be dissolved therein at a temperature of 80°C to 85°C for 12 hours or more so as to obtain a uniform liquid phase. The obtained solution was cast to a thickness of 150µm on a nonwoven fabric of a polyester material having a thickness of 95 to 100µm. Subsequently, the cast nonwoven fabric was dipped in water to thus manufacture a porous polysulfone support.

The porous polysulfone support manufactured through the method described above was dipped in an aqueous solution containing 2 weight% of m-phenylenediamine (mPD) for 2 minutes and then removed therefrom. Then, an excessive amount of aqueous solution on the support was removed using a 25psi roller and dried at a room temperature for 1 minute.

Subsequently, the support was dipped in an organic solution containing 0.1 weight% of trimesoyl chloride (TMC), obtained using ISOL-G (Exxonmobil Chemical) solvent, removed therefrom, and dried in an oven of 60°C for 10 minutes.

Next, the dried support was re-dipped in an organic solution (isopropyl alcohol:water = 75wt%:25wt%) containing 1 weight% of m-phenylenediamine for 10 seconds and then dried at a room temperature for 10 minutes.

A reverse osmosis membrane obtained through the method described above was washed in an aqueous solution containing 0.2 weight% of sodium carbonate at a room temperature for 2 minutes and then re-washed using distilled water for 1 minute, whereby the reverse osmosis membrane having a polyamide active layer was manufactured.

### <Embodiment 2>

A reverse osmosis membrane was manufactured through the same method as Embodiment 1, except that an organic solution (isopropyl alcohol:water = 75wt%:25wt%) containing 5 weight% of m-phenylenediamine was used instead of the dipping using the organic solution (isopropyl alcohol:water = 75wt%:25wt%) containing 1 weight% of m-phenylenediamine in Embodiment 1.

### <Embodiment 3>

A reverse osmosis membrane was manufactured through the same method as Embodiment 1, except that an organic solution (isopropyl alcohol:water = 75wt%:25wt%) containing 10 weight% of m-phenylenediamine was used instead of the re-dipping using the organic solution (isopropyl alcohol:water = 75wt%:25wt%) containing 1 weight% of m-phenylenediamine in Embodiment 1.

### <Embodiment 4>

A reverse osmosis membrane was manufactured through the same method as Embodiment 1, except that an organic solution (isopropyl alcohol:water = 75wt%:25wt%) containing 20 weight% of m-phenylenediamine was used instead of the re-dipping using the organic solution (isopropyl alcohol:water = 75wt%:25wt%) containing 1 weight% of m-phenylenediamine in Embodiment 1.

### <Embodiment 5>

A reverse osmosis membrane was manufactured through the same method as Embodiment 1, except that an organic solution (isopropyl alcohol:water = 75wt%:25wt%) containing 30 weight% of m-phenylenediamine was used instead of the re-dipping using the organic solution (isopropyl alcohol:water = 75wt%:25wt%) containing 1 weight% of m-phenylenediamine in Embodiment 1.

### <Embodiment 6>

A reverse osmosis membrane was manufactured through the same method as Embodiment 1, except that an organic solution (ethanol:water = 75wt%:25wt%) containing 20 weight% of m-phenylenediamine was used instead of the re-dipping using the organic solution (isopropyl alcohol:water = 75wt%:25wt%) containing 1 weight% of m-phenylenediamine in Embodiment 1.

### <Embodiment 7>

A reverse osmosis membrane was manufactured through the same method as Embodiment 1, except that an organic solution (ethanol:water = 75wt%:25wt%) containing 30 weight% of m-phenylenediamine was used instead of the re-dipping using the organic solution (isopropyl alcohol:water = 75wt%:25wt%) containing 1 weight% of m-phenylenediamine in Embodiment 1.

### <Comparative Example 1>

A reverse osmosis membrane was manufactured through the same method as Embodiment 1, except that a washing process was immediately performed without re-dipping in an aqueous solution containing 0.2 weight% of sodium carbonate, instead of the re-dipping using the organic solution (isopropyl alcohol: water = 75wt%:25wt%) containing 1 weight% of m-phenylenediamine in Embodiment 1.

### <Comparative Example 2>

A reverse osmosis membrane was manufactured through the same method as Embodiment 1, except that an aqueous solution containing 20 weight% of m-phenylenediamine was used instead of the re-dipping using the organic solution (isopropyl alcohol:water = 75wt%:25wt%) containing 1 weight% of m-phenylenediamine in Embodiment 1.

### <Comparative Example 3>

A reverse osmosis membrane was manufactured through the same method as Embodiment 1, except that an organic solution (isopropyl alcohol:water = 75wt%:25wt%) containing 20 weight% of dimethylaminopropylamine was used instead of the re-dipping using the organic solution (isopropyl alcohol:water = 75wt%:25wt%) containing 1 weight% of m-phenylenediamine in Embodiment 1.

### <Comparative Example 4>

A reverse osmosis membrane was manufactured through the same method as Embodiment 1, except that an organic solution (isopropyl alcohol:water = 75wt%:25wt%) containing 0.05 weight% of m-phenylenediamine was used instead of the re-dipping using the organic solution (isopropyl alcohol: water = 75wt%:25wt%) containing 1 weight% of m-phenylenediamine in Embodiment 1.

### <Comparative Example 5>

A reverse osmosis membrane was manufactured through the same method as Embodiment 1, except that an organic solution (isopropyl alcohol:water = 75wt%:25wt%) containing 50 weight% of m-phenylenediamine was used instead of the re-dipping using the organic solution (isopropyl alcohol:water = 75wt%:25wt%) containing 1 weight% of m-phenylenediamine in Embodiment 1.

### <Experimental Example 1 - Measurement of Initial Salt Rejection and Initial Permeable Flux>

The reverse osmosis membranes manufactured in Embodiments 1 to 7 and Comparative Examples 1 to 5 were evaluated with respect to Initial salt rejection and initial permeable flux thereof through the following method. The initial salt rejection and the initial permeable flux properties were measured while supplying 32, 000ppm of a sodium chloride aqueous solution at 25°C at a flow rate of 4500mL/min. A reverse osmosis membrane cell device used in the evaluation of a film includes a flat-type permeation cell, a high-pressure pump, a reservoir, and a cooling device. The structure of the flat-type permeation cell has an effective permeation area of 140cm2 in a cross-flow scheme. The washed reverse osmosis membrane was installed in the permeation cell and a sufficient degree of preliminary driving thereof for around 1 hour was then carried out using a third distilled water, for stabilization of the equipment to be evaluated. Then, by replacing the distilled water with 32, 000ppm of sodium chloride, the equipment was run for around 1 hour until pressure and permeable flux thereof reached a normal state, and an amount of water permeated for 10 minutes was measured to calculate a flux thereof. Further, a salt concentration before and after the permeation was analyzed using a conductivity meter to thus calculate a salt rejection rate. The measurement result is illustrated in [Table 1] below.

**[Table 1]**

| Classification | Composition of Solvent (Wt%) | MPD Addition Amount (Wt%) | Salt Rejection (%) | Permeable Flux (GFD) |
|---|---|---|---|---|
| Embodiment 1 | IPA 75% | 1 | 99.18 | 31.01 |
| Embodiment 2 | | 5 | 99.25 | 31.58 |
| Embodiment 3 | | 10 | 99.45 | 34.89 |
| Embodiment 4 | | 20 | 99.71 | 36.91 |
| Embodiment 5 | | 30 | 99.60 | 35.34 |
| Embodiment 6 | Ethanol 75% | 20 | 99.65 | 35.76 |
| Embodiment 7 | Methanol 75% | 20 | 99.61 | 35.24 |
| Comparative Example 1 | - | - | 99.12 | 30.37 |
| Comparative Example 2 | D.I Water 100% | 20 | 99.09 | 30.04 |
| Comparative Example 3 | IPA 75% | 20 | 98.85 | 35.73 |
| Comparative Example 4 | IPA 75% | 0.05 | 98.87 | 30.26 |
| Comparative Example 5 | IPA 75% | 50 | 99.35 | 28.52 |

As illustrated in [Table 1], it can be appreciated from the comparison result of Embodiments 1 to 7 with Comparative Example 1 that at the time of additional contact of an organic solution containing an amine compound, salt rejection and permeable flux properties of the reverse osmosis membrane are significantly excellent. In addition, in comparing Embodiments 4, 6 and 7 with Comparative Example 2, a significant effect may be exhibited when an alcohol solvent such as IPA, ethanol, and methanol is used. For example, it can be appreciated from the result above that a relatively excellent effect may be obtained in the organic solution containing 20 weight% of mPD. In addition, in the case of Embodiment 3 of the present disclosure in which a chain amine compound other than an aromatic amine compound was used, it could be appreciated that the permeable flux was increased, but the salt rejection properties were significantly deteriorated. Further, in the case of Embodiments 4 and 5, it could be confirmed that in the case in which the content of an amine compound in the organic solution containing a multifunctional aromatic amine compound deviated from the content range of the present disclosure, the salt rejection properties and/or the permeable flux properties were degraded.

### Experimental Example 2 - Measurement of Surface Properties>

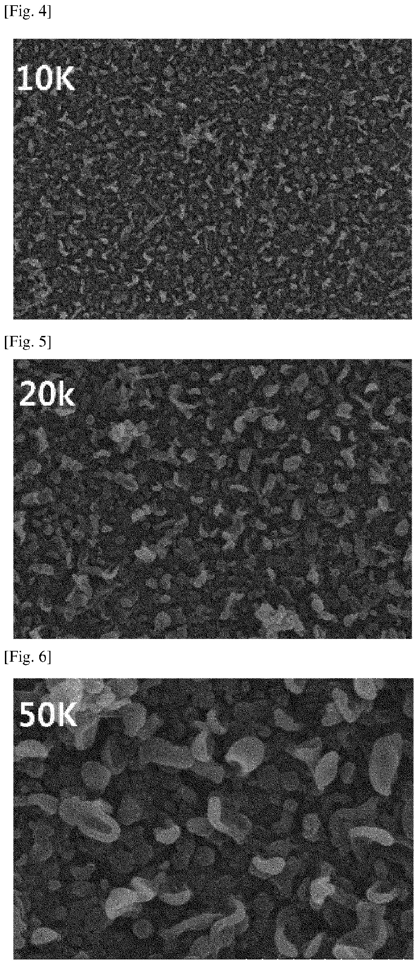

Images of surfaces of polyamide active layers formed in Embodiment 4 and Embodiment 1 of the present disclosure were captured using an SEM and were provided as SEM images. Images photographing on polyamide active layer surfaces of Embodiment 4 are illustrated in FIGS. 1 to 3, and images photographing on polyamide active layer surfaces of Comparative Example 1 are illustrated in FIGS. 4 to 6. It can be appreciated from FIGS. 1 to 3 that the polyamide active layer formed in Embodiment 4 has a three-dimensional reticular structure formed thereon.

In addition, a formation range of polymerization region additionally formed through the three-dimensional reticular structure, on surfaces of the reverse osmosis membranes manufactured in Embodiments 4, 6 and 7 and Comparative Examples 1, 2, 4 and 5, was listed in [Table 2]. Here, a method of measuring an additional polymerization region was performed by obtaining a two-dimensional image of a reverse osmosis membrane surface in a state in which light and darkness contrast, depending on a difference in illumination, is relatively maximized at 5000x magnification using a reflective laser confocal microscope (LEXT OLS4100 by Olympus) and by calculating a ratio of a light portion with respect to the entire image area (for example, a 3D reticular structure region formed on a surface through additional polymerization, with respect to the overall area of a polyamide active layer) using an image analysis program.

**[Table 2]**

| Classification | Composition of Solvent (Wt%) | MPD Addition Amount (Wt%) | Additional Polymerization Region (%) |
|---|---|---|---|
| Embodiment 4 | IPA 75% | 20 | 80 |
| Embodiment 6 | Ethanol 75% | 20 | 65 |
| Embodiment 7 | Methanol 75% | 20 | 60 |
| Comparative Example 1 | | | 15 |
| Comparative Example 2 | D. I Water 100% | 2 | 20 |
| Comparative Example 4 | IPA 75% | 0.05 | 25 |
| Comparative Example 5 | IPA 75% | 50 | 45 |

As can be confirmed through Table 2 above, it can be appreciated that in the case that a high concentration of aromatic amine compound, based on a content range of the present disclosure, was additionally polymerized using an alcohol solvent, a three-dimensional reticular structure region of 50% or more was formed.

While the present disclosure has been shown and described in connection with the embodiments, it will be apparent to those skilled in the art that modifications and variations can be made without departing from the scope of the present disclosure as defined by the appended claims.

## Claims

1. A method of manufacturing a reverse osmosis membrane, the method comprising:
forming an aqueous solution layer containing a multifunctional aromatic amine compound on a porous support;
forming a polyamide active layer by bringing an organic solution containing an acyl halide compound to contact an upper portion of the aqueous solution layer; and
allowing an organic solution containing a multifunctional aromatic amine compound to contact an upper portion of the polyamide active layer, wherein the organic solution containing the multifunctional aromatic amine compound comprises an alcohol solvent,
the alcohol concentration is 50 weight% or more, and
the organic solution containing the multifunctional aromatic amine compound comprises 1 to 30 weight% of a multifunctional aromatic amine compound.

2. The method of claim 1, wherein the multifunctional aromatic amine compound is a compound represented by the following chemical formula 1, 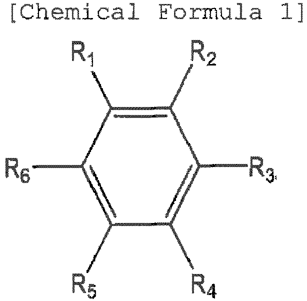 where at least two or more of R₁ to R₆ are NX₁X₂, and the remainder thereof are H or halogen, respectively independently, wherein X₁ and X₂ are respectively independently selected from a group consisting of hydrogen, C₁₋₈alkoxy, C₁₋₁₅alkyl, C₂-₁₂alkenyl, C₃₋₈cycloalkyl, C₃₋₈cycloalkenyl, C₄₋₁₂alkylcycloalkyl, C₄₋₁₂alkylcycloalkenyl, C₆₋₁₀aryl, and C₆₋₁₀aryl-C₁₋₈alkyl.

3. The method of claim 1, wherein the multifunctional aromatic amine compound is selected from a group consisting of m-phenylenediamine, p-phenylenediamine, 1,3,6-benzene triamine, 4-chloro-1,3-phenylenediamine, 6-chloro-1,3-phenylenediamine, 3-chloro-1,4-phenylenediamine, and mixtures thereof.

4. The method of claim 1, wherein the acyl halide compound is one or more selected from a group consisting of trimesoyl chloride, isophthaloyl chloride, and terephthaloyl chloride.

5. The method of claim 1, wherein the allowing of the organic solution containing the multifunctional aromatic amine compound to contact the upper portion of the polyamide active layer comprises forming polyamide through an additional interfacial polymerization reaction of a nonreacted acyl halide compound and a multifunctional aromatic amine compound on the polyamide active layer.

6. The method of claim 1, wherein the organic solution containing the multifunctional aromatic amine compound comprises one or more solvents selected from a group consisting of isopropyl alcohol (IPA), methanol, ethanol, and n-propanol.

7. The method of claim 1, wherein the multifunctional aromatic amine compound s used in the aqueous solution layer containing the multifunctional aromatic amine compound and in the organic solution containing the multifunctional aromatic amine compound are the same kind of compounds.

## Patentansprüche

1. Verfahren zum Herstellen einer Umkehrosmosemembran, wobei das Verfahren umfasst:
Bilden einer wässrigen Lösungsschicht enthaltend eine mehrfunktionelle aromatische Aminverbindung auf einem porösen Träger;
Bilden einer Polyamidaktivschicht durch Inkontaktbringen einer organischen Lösung enthaltend eine Acylhalogenidverbindung mit einem oberen Bereich der wässrigen Lösungsschicht; und
Ermöglichen einer organischen Lösung enthaltend eine mehrfunktionelle aromatische Aminverbindung, einen oberen Bereich der Polyamidaktivschicht zu kontaktieren, wobei die organische Lösung enthaltend die mehrfunktionelle aromatische Aminverbindung ein Alkohollösungsmittel umfasst,
wobei die Alkoholkonzentration 50 Gew.-% oder höher ist, und
die organische Lösung enthaltend die mehrfunktionelle aromatische Aminverbindung 1 bis 30 Gew.-% einer mehrfunktionellen aromatischen Aminverbindung umfasst.

2. Verfahren nach Anspruch 1, wobei die mehrfunktionelle aromatische Aminverbindung eine Verbindung ist, die durch die folgende chemische Formel 1 dargestellt ist, 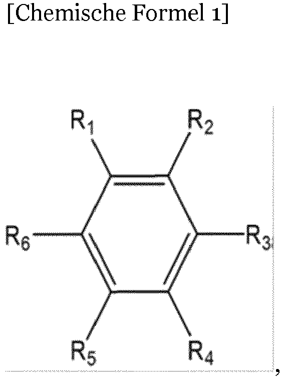 wobei wenigstens zwei oder mehrere von R₁ bis R₆ NX₁X₂ sind, und wobei der Rest derselben unabhängig H oder Halogen ist, wobei X₁ und X2 jeweils unabhängig ausgewählt sind aus einer Gruppe bestehend aus Wasserstoff, C₁₋₈-Alkoxy, C₁₋₁₅-Alkyl, C₂₋₁₂-Alkenyl, C₃₋₈-Cycloalkyl, C₃₋₈-Cycloalkenyl, C₄₋₁₂-Alkylcycloalkyl, C₄₋₁₂-Alkylcycloalkenyl, C₆₋₁₀-Aryl und C₆₋₁₀-Aryl-C₁₋₈-alkyl.

3. Verfahren nach Anspruch 1, wobei die mehrfunktionelle aromatische Aminverbindung ausgewählt ist aus einer Gruppe bestehend aus m-Phenylendiamin, p-Phenylendiamin, 1,3,6-Benzoltriamin, 4-Chlor-1,3-phenylendiamin, 6-Chlor-1,3-phenylendiamin, 3-Chlor-1,4-phenylendiamin und Mischungen derselben.

4. Verfahren nach Anspruch 1, wobei die Acylhalogenidverbindung eine oder mehrere ist, ausgewählt aus einer Gruppe bestehend aus Trimesoylchlorid, Isophthaloylchlorid und Terephthaloylchlorid.

5. Verfahren nach Anspruch 1, wobei das Ermöglichen der organischen Lösung enthaltend die mehrfunktionelle aromatische Aminverbindung, den oberen Bereich der Polyamidaktivschicht zu kontaktieren, ein Bilden von Polyamid durch eine zusätzliche Grenzflächenpolymerisationsreaktion einer nicht umgesetzten Acylhalogenidverbindung und einer mehrfunktionellen aromatischen Aminverbindung auf der Polyamidaktivschicht umfasst.

6. Verfahren nach Anspruch 1, wobei die organische Lösung enthaltend die mehrfunktionelle aromatische Aminverbindung eine oder mehrere Lösungsmittel umfasst, die ausgewählt sind aus einer Gruppe bestehend Isopropylalkohol (IPA), Methanol, Ethanol und n-Propanol.

7. Verfahren nach Anspruch 1, wobei die mehrfunktionellen aromatischen Aminverbindungen, die in der wässrigen Lösungsschicht enthaltend die mehrfunktionelle aromatische Aminverbindung und in der organischen Lösung enthaltend die mehrfunktionelle aromatische Aminverbindung verwendet werden, die gleiche Art von Verbindungen sind.

## Revendications

1. Procédé de fabrication d'une membrane à osmose inverse, le procédé consistant à :
former une couche de solution aqueuse contenant un composé d'amine aromatique multifonctionnel sur un support poreux ;
former une couche active de polyamide en amenant une solution organique contenant un composé d'halogénure d'acyle en contact avec la partie supérieure de la couche de solution aqueuse ; et
permettre à une solution organique contenant un composé d'amine aromatique multifonctionnel d'entrer en contact avec une partie supérieure de la couche active de polyamide, dans lequel la solution organique contenant le composé d'amine aromatique multifonctionnel comprend un solvant alcoolique,
la concentration d'alcool est égale ou supérieure à 50 % en poids, et
la solution organique contenant le composé d'amine aromatique multifonctionnel comprend entre 1 et 30 % en poids d'un composé d'amine aromatique multifonctionnel.

2. Procédé selon la revendication 1, dans lequel le composé d'amine aromatique multifonctionnel est un composé représenté par la formule chimique 1 ci-après, 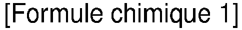 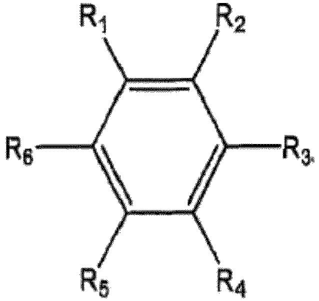 où deux ou plus de deux de R₁ à R₆ sont NX₁X₂, et le reste de ceux-ci sont H ou un halogène, respectivement indépendamment, dans lequel X₁ et X₂ sont respectivement indépendamment sélectionnés dans un groupe constitué d'un hydrogène, C₁₋₈alkoxy, C₁₋₁₅alkyle, C₂₋₁₂alkényle, C₃₋₈cycloalkyle, C₃₋₈cycloalkényle, C₄₋₁₂alkylcycloalkyle, C₄₋₁₂alkylcycloalkényle, C₆₋₁₀aryle et C₆₋₁₀aryle-C₁₋₈alkyle,

3. Procédé selon la revendication 1, dans lequel le composé d'amine aromatique multifonctionnel est sélectionné dans un groupe constitué de m-phénylènediamine, p-phénylènediamine, 1,3,6-benzène triamine, 4-chloro-1,3-phénylènediamine, 6-chloro-1,3-phénylènediamine, 3-chloro-1,4-phénylènediamine, et des mélanges de ces derniers.

4. Procédé selon la revendication 1, dans lequel le composé d'halogénure d'acyle est un ou plusieurs composés sélectionnés dans un groupe constitué de chlorure de trimésoyle, chlorure d'isophtaloyle et chlorure de téréphtaloyle.

5. Procédé selon la revendication 1, dans lequel le fait de permettre à la solution organique contenant le composé d'amine aromatique multifonctionnel d'entrer en contact avec la partie supérieure de la couche active de polyamide consiste à former un polyamide par le biais d'une réaction de polymérisation interfaciale additionnelle d'un composé d'halogénure d'acyle non réagi et d'un composé d'amine aromatique multifonctionnel sur la couche active de polyamide.

6. Procédé selon la revendication 1, dans lequel la solution organique contenant le composé d'amine aromatique multifonctionnel comprend un ou plusieurs solvants sélectionnés dans le groupe constitué de l'alcool isopropylique (IPA), méthanol, éthanol et n-propanol.

7. Procédé selon la revendication 1, dans lequel les composés d'amine aromatique multifonctionnel utilisés dans la couche de solution aqueuse contenant le composé d'amine aromatique multifonctionnel et dans la solution organique contenant le composé d'amine aromatique multifonctionnel sont la même sorte de composés.
